# EUROPÄISCHE PATENTSCHRIFT

(11) **EP 0 393 546 B1**
(45) Veröffentlichungstag und Bekanntmachung des Hinweises auf die Patenterteilung: **28.09.1994**
(21) Anmeldenummer: 90107149.8
(22) Anmeldetag: 14.04.1990
(51) Int. Cl.: C08G 69/36, C08G 69/26

(54) **Verfahren zur kontinuierlichen Herstellung von Copolyamiden aus Caprolactam und Salzen aus Diaminen und Dicarbonsäuren**
Process for the continuous manufacture of copolyamides from caprolactam and salts of diamines and dicarboxylic acids
Procédé de production continue de copolyamides à base de caprolactame et de sels de diamines et acides dicarboxyliques

(30) Priorität: 19.04.1989 DE 3912768
(43) Veröffentlichungstag der Anmeldung: 24.10.1990
(73) Patentinhaber: BASF Aktiengesellschaft, 67063 Ludwigshafen (DE)
(72) Erfinder: Pipper, Gunter, D-6702 Bad Duerkheim (DE); Cordes, Claus, Dr., D-6719 Weisenheim (DE); Schmidt, Franz, Dr., D-6800 Mannheim 1 (DE); Reimann, Horst, Dr., D-6520 Worms 1 (DE); Koch, Eckhard Michael, Dr., D-6701 Fussgoenheim (DE)

(56) Entgegenhaltungen:
- EP-A- 0 098 412
- EP-A- 0 129 195
- EP-A- 0 288 893
- FR-A- 2 297 875

## Beschreibung

Aus der DD-Patentschrift 110 507 ist ein verfahren zur Herstellung von Copolyamiden aus Caprolactam und Salzen aus Diaminen und Dicarbonsäuren z.B. AH-Salz bekannt, bei dem man einem VK-Rohr von oben Caprolactam, AH-Salz und Wasser zuführt und am unteren Teil das entsprechende Copolyamid entnimmt. Das verfahren hat den Nachteil, daß mit dem am VK-Rohr oben entweichenden Dämpfen Diamin mitausgetragen wird und verlorengeht. Ferner hat das verfahren den Nachteil, daß durch das mit der zugeführten AH-Salzlösung freiwerdende Wasser eine präzise Temperaturführung im VK-Rohrkopf erheblich beeinträchtigt wird.

Es war deshalb die technische Aufgabe gestellt, ein kontinuierliches verfahren zur Herstellung von Copolyamiden aus Caprolactam und Salzen aus Diaminen und Dicarbonsäuren zur Verfügung zu stellen, bei dem die flüchtigen Amine wiedergewonnen und zurückgeführt werden, und eine gleichbleibende Qualität des erzeugten Copolyamids auch hinsichtlich des Endgruppengehalts erhalten wird und zugleich die Temperaturführung im VK-Rohrkopf verbessert wird.

Diese Aufgabe wird gelöst in einem kontinuierlichen verfahren zur Herstellung von Copolyamiden aus Caprolactam und Salzen aus Diaminen und Dicarbonsäuren, bei dem man Caprolactam zusammen mit Präpolymeren aus Dicarbonsäuren und Diaminen von oben nach unten durch ein senkrecht stehendes Polymerisationsrohr bei Polyamid bildenden Temperaturen leitet, dadurch gekennzeichnet, daß man
(a) eine wäßrige Lösung von Salzen aus äquimolaren Mengen von Diaminen und Dicarbonsäuren unter erhöhtem Druck und gleichzeitiger Verdampfung von Wasser durch eine rohrförmige Vorkondensationszone unter Bildung einer Dampfphase und eines Präpolymeren bei einer Temperatur über dem Schmelzpunkt des Präpolymeren leitet
(b) die Dampfphase von der Polymerschmelze trennt
(c) die Dampfphase in einer Kolonne in wasserdampf und eine wäßrige Diaminlösung trennt und die Diamine enthaltende wäßrige Lösung in die Polymerisation zurückführt
(d) die Präpolymerschmelze mit geschmolzenem Caprolactam bei Polyamid bildenden Temperaturen mischt und
(e) das Gemisch aus Präpolymeren und Caprolactam von oben nach unten durch ein senkrecht stehendes Polymerisationsrohr bei Polyamid bildenden Temperaturen leitet und ein Copolyamid erhält.

Das neue Verfahren hat den Vorteil, daß es auf einfache Weise kontinuierlich durchführbar ist und hierbei abgespaltene Diamine und andere flüchtige Anteile wiederum der Reaktion zugeführt werden. Ferner hat das neue Verfahren den Vorteil, daß Copolyamide konstanter Zusammensetzung mit gleichbleibender Qualität und ausgewogener Endgruppenzahl erhalten werden.

Erfindungsgemäß verwendet man als Copolyamidkomponenten Salze aus äquimolaren Mengen an Diaminen und Dicarbonsäuren in wäßriger Lösung. Bevorzugte Diamine haben die Formel I

H₂N-R₁-NH₂ I,

in der R₁ einen Alkylenrest mit 4 bis 16 Kohlenstoffatomen, insbesondere 4 bis 8 Kohlenstoffatomen oder einen 1,3- oder 1,4-Phenylenrest bezeichnet. Geeignete Verbindungen sind beispielsweise 1,4-Diaminobutan, Hexamethylendiamin, Octamethylendiamin, Decamethylendiamin, 1,3-Phenylendiamin oder 1,4-Phenylendiamin. Besondere technische Bedeutung haben Diamine der Formel I erlangt, in denen R₁ einen geradkettigen Alkylensrest mit 4 bis 8 Kohlenstoffatomen bezeichnet. Besonders technische Bedeutung hat insbesondere Hexamethylendiamin erlangt.

Bevorzugte Dicarbonsäuren haben die Formel II

HOOC-R₂-COOH II,

in der R₂ einen Alkylenrest mit 4 bis 12 Kohlenstoffatomen, insbesondere 4 bis 8 Kohlenstoffatomen bezeichnet oder einen 1,3- oder 1,4-Phenylenrest bedeutet. Geeignete Dicarbonsäuren sind beispielsweise Adipinsäure, Azelainsäure, Sebazinsäure, Korksäure, Dodecandisäure, Terephthalsäure oder Isophthalsäure. Besonders bevorzugt sind Adipinsäure, Dodecandisäure, Terephthalsäure und Isophthalsäure. Besondere technische Bedeutung haben Salze aus Adipinsäure/Hexamethylendiamin, Terephthalsäure/Hexamethylendiamin und Isophthalsäure/Hexamethylendiamin sowie Dodecandisäure/Hexamethylendiamin erlangt.

Es versteht sich, daß man Diamine und Dicarbonsäuren in äquimolaren Mengen einsetzt. Die verwendeten wäßrigen Lösungen haben in der Regel einen Gehalt von 30 bis 70 Gew.%, insbesondere 50 bis 65 Gew.%, an den genannten Salzen. Wäßrige Lösungen haben in der Regel eine pH-Wert von 7,7 bei 20°C. Vorteilhaft geht man von wäßrigen Lösungen mit einer Temperatur von 80bis 100°C aus.

Vorteilhaft verwendet man zusätzlich zu den Salzen aus Diaminen und Dicarbonsäuren Caprolactam. Besonders bewährt hat es sich, wenn man eine wäßrige Lösung von Caprolactam, die beispielsweise 60 bis 90 Gew.% Caprolactam enthält und durch Extraktion des erzeugten Copolyamids mit Wasser und Eindampfen des wäßrigen Extrakts vorzugsweise unter Zusatz der 0,5 bis 2-fachen Menge an Frischlactam, bezogen auf Extraktlactam erhalten worden ist verwendet. Eine geeignete Lösung erhält man beispielsweise nach dem in der DE-AS 25 01 348 beschriebenen Verfahren. Die Menge des mitverwendeten Caprolactams beträgt in der Regel von 5 bis 50 Gew.% insbesondere von 5 bis 30 Gew.% der Gesamtmenge des in dem erfindungsgemäßen Verfahren verwendeten Caprolactams.

Erfindungsgemäß leitet man in der Stufe a eine wäßrige Lösung aus Salzen von Diaminen und äquivalenten Mengen an Dicarbonsäuren und ggf. Caprolactam unter erhöhtem Druck und gleichzeitiger Verdampfung von Wasser durch eine rohrförmige Vorkondensationszone unter Bildung einer Dampfphase und einem Präpolymeren bei einer Temperatur über dem Schmelzpunkt des Präpolymeren. Vorteilhaft hält man in der Vorkondensationszone eine Temperatur von 250 bis 350°C, insbesondere 255 bis 285°C, ein. In der Regel hält man in der Vorkondensationszone einen Überdruck von 0,5 bis 2,5 bar ein. Vorteilhaft beträgt die Verweilzeit in der Vorkondensationszone 40 bis 600 Sekunden. Ferner hat es sich bewährt, wenn der Umsetzungsgrad bei Austritt aus der Vorkondensationszone > 81 %, insbesondere 86 bis 96. %, beträgt und der Wassergehalt des Präpolymeren < 2 Gew.% ist.

Nach einer vorteilhaften Arbeitsweise mit Verweilzeiten von 40 bis 120 Sekunden ist die rohrförmige Vorkondensationszone periodisch wiederkehrend, röhrenförmig und spaltförmig ausgebildet. Sofern größere Verweilzeiten von 3 bis 10 Minuten angewandt werden, ist die rohrförmige Vorkondensationszone vorteilhaft mit Einbauten versehen, wie Füllkörpern, Raschigringen oder Pallringen, insbesondere Geweberingen aus Drahtnetz, um eine große Oberfläche zu erzielen. Vorteilhaft beträgt die freie Oberfläche je Liter Reaktionsraum 0,7 bis 1,5 m². In der Technik hat es sich bewährt, wenn man mehrere Vorkondensationszonen parallel als Röhrenbündel verwendet.

Beim Austritt aus der Vorkondensationszone hat das Präpolymere vorteilhaft, sofern nur Salze von Diaminen und Dicarbonsäuren verwendet werden, eine relative Viskosität von 1,2 bis 1,3, einen Umsatz von 81 bis 82 %, einen Carboxylendgruppengehalt von 300 bis 350 mäq/kg und einen Amino-endgruppengehalt von 300 bis 350 mäq/kg.

Sofern zusätzlich Caprolactam mitverwendet wird, hat das Präpolymere in der Regel, einen Umsatz von 93 bis 98 %, einen Carboxylendgruppengehalt von 450 bis 480 mäq/kg und einen Aminoendgruppengehalt von 450 bis 480 mäq/kg.

In der Stufe b wird das aus der Vorkondensationszone austretende zweiphasige Gemisch aus Dampfphase und Präpolymeren getrennt. Die Trennung erfolgt in der Regel von selbst aufgrund der physikalischen Unterschiede in einem Gefäß. Vorteilhaft leitet man das zweiphasige Gemisch aus Dampfphase und Präpolymeren in den Dampfraum am Kopf der rohrförmigen Polymerisationszone (VK-Rohr) und führt dort die Trennung durch.

In Stufe c wird die anfallende Dampfphase in einer Kolonne in Wasserdampf und eine wäßrige Diaminlösung getrennt und die wäßrige Diaminlösung in die Polymerisation zurückgeführt. Sofern man Caprolactam mitverwendet oder die Trennung der Phasen im Kopf der rohrförmigen Polymerisationszone (VK-Rohr) durchführt, enthalten die Brüden neben Wasserdampf und Diaminen Caprolactam und dessen Dimeres. Die Trennung der Dampfphase erfolgt vorteihaft in einer Kolonne unter Rektifikation. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Bedingungen wie bei der Trennung von Dampfphase und Präpolymeren oder unter dem Druck der Polymerisationszone betrieben. Vorteilhaft gibt man am Kopf der Kolonne je kg Dampf 0,1 bis 0,5 l Wasser auf, um den Trenneffekt zu verbessern. Als Sumpf erhält man eine wäßrige Lösung an flüchtigen Diaminen und ggf. Caprolactam und dessen Dimere. Am Kopf der Kolonne fällt Wasserdampf an, der ggf. für die Festphasenkondensation für das Copolyamid verwendet werden kann.

In der Regel führt man die Diamine enthaltende wäßrige Lösung in Stufe a) zurück. Sofern nach der bevorzugten Arbeitsweise die Trennung im VK-Rohrkopf durchgeführt wird, leitet man die wäßrige Diaminlösung in die Stufe d zurück.

Die Präpolymerschmelze wird in Stufe d mit geschmolzenem Caprolactam bei Polyamid bildenden Temperaturen gemischt. Hierbei wird in der Regel die Hauptmenge des Caprolactams zugeführt, die zur Erzeugung des Copolyamids nötig ist. Nach einer bevorzugten Arbeitsweise führt man somit am Kopf des rohrförmigen Polymerisationsrohres Präpolymeres und geschmolzenes Caprolactam zu und vermischt beide mit der dort vorliegenden Schmelze, die im wesentlichen aus Caprolactam, niedermolekularem Caprolactam, Polycaprolactam, Präpolymerem und niedermolekularem Copolyamid besteht. Die Mischung der Komponenten im Kopf der rohrförmigen Polymerisationszone erfolgt in der Regel durch Rühren.

In der Stufe e wird das Gemisch aus Präpolymeren und Caprolactam von oben nach unten durch ein senkrecht stehendes Polymerisationsrohr (VK-Rohr) bei Polyamid bildenden Temperaturen geleitet und ein Copolyamid erhalten. Im oberen Drittel des Polymerisationsrohres hält man in der Regel eine Temperatur von 250 bis 285°C, insbesondere 255 bis 280°C, ein. Durch den relativ hohen Endgruppengehalt des Präpolymeren beträgt der Umsatz im ersten Viertel des Polymerisationsrohres von oben gesehen bis zu 70 % z.B. von 65 bis 70 %. Im Verlauf des Polymerisationsrohres wird die Schmelze so temperiert, daß am unteren Ende eine Schmelze mit 240 bis 250°C erhalten wird. Die Verweilzeit im Polymerisationsrohr beträgt in der Regel 8 bis 14 Stunden. Das so erhaltene Copolyamid hat in der Regel eine relative Viskosität von 2,4 bis 3,0 und einen Gehalt an mit Wasser extrahierbaren Anteilen von 3,5 bis 10, insbesondere 5 bis 8 Gew.%. Der Gehalt an Triaminen beträgt in der Regel weniger als 0,06 Gew.%. Die so erhaltene Copolyamidschmelze wird im allgemeinen in Stränge vergossen, verfestigt und granuliert. Das so erhaltene Granulat wird dann kontinuierlich im Gegenstrom mit Wasser bei einer Temperatur von 80 bis 120°C extrahiert. Das so erhaltene wäßrige Extrakt wird dann vorteilhaft nach Zusatz der 0,5 bis 2-fachen Menge an Frischcaprolactam, bezogen auf Extraktcaprolactam, eingedampft. Ein geeignetes Verfahren wird beispielsweise beschrieben in der DE-AS 25 01 348. Im allgemeinen wird das extrahierte Copolyamid anschließend getrocknet. Vorteilhaft wird es hierbei unter Mitverwendung von Inertgasen wie Stickstoff oder überhitztem Wasserdampf als Wärmeträger im Gegenstrom bis zur gewünschten Viskosität, z.B. bei einer Temperatur von 150 bis 185°C, getempert. Vorteilhaft verwendet man hierbei den in Stufe c anfallenden Wasserdampf.

Copolyamide, die nach dem Verfahren der Erfindung erhältlich sind, haben in der Regel 70 bis 95 Gew.%, insbesondere 80 bis 90 Gew.% Polyamid-6 Einheiten und eignen sich zur Herstellung von Formkörpern durch Spritzguß oder Extrusion, ferner zur Herstellung von Fäden und Fasern.

Das erfindungsgemäße Verfahren sei an folgenden Beispielen veranschaulicht.

### Beispiele

### Beispiel 1

Eine 62 gew.%ige Lösung von AH-Salz wird aus einem beheizten Vorlagebehälter bei ca. 80°C mit einer Geschwindigkeit entsprechend einer Polyamid-Menge von 3 kg/h mittels einer Dosierpumpe in einen vertikal angeordneten Röhrenverdampfer befördert. Der Verdampfer wird mit einem flüssigen Wärmeträger, der eine Temperatur von 285°C hat, bei kräftiger Umwälzung beheizt. Der Verdampfer hat eine Länge von 3 m, einen Inhalt von 180 ml und eine wärmeübertragende Oberfläche von 1300 cm². Die Verweilzeit im Verdampfer beträgt 70 sec und der Überdruck beträgt 0,9 bar. Das aus dem Verdampfer austretende Gemisch aus Präpolymer, Wasserdampf und flüchtigen Bestandteilen wird mit einer Temperatur von 280°C in den VK-Rohrkopf eingetragen und unter einem Überdruck von 980,7 Pa aufgetrennt. Das Präpolymere vermischt sich unter Rühren mit frischem Caprolactam, das zur gleichen Zeit kontinuierlich mit einer Menge von 18,7 kg/h schmelzeflüssig bei 80°C eingetragen wird und dem Inhalt des VK-Rohrkopfes. Nach einer Verweilzeit in Schmelze von ca. 10 - 11 h und einer Temperatur von 255 - 285°C wird ein Umsatz von 92,0 % erreicht, das Molekulargewicht entspricht einer ηrel von 2,9 bis 3,0, gemessen 1 %ig in 98 %iger H₂SO₄. Die Polymerschmelze wird über eine Pumpe einem Gießer zugeführt, über eine Düsenplatte ausgepreßt, im Wasserbad verfestigt und granuliert.

Der bei der Auftrennung im VK-Rohrkopf anfallende überhitzte Wasserdampf, der flüchtige Komponenten beinhaltet, wird einer Kolonne mit 10 theoretischen Böden Zugeführt, in die am Kopf ca. 1 l/h Brüdenkondensat zur Verbesserung des Trenneffektes aufgegeben werden. Am Kolonnenkopf stellt sich eine Temperatur von ca. 100°C ein, der Überdruck beträgt 980,7 Pa. Der Wasserdampf wird kondensiert und hat einen Hexamethylendiamingehalt < 0,01 %, der Gehalt an Caprolactam liegt bei 0,02 %.

Als Kolonnensumpf erhält man eine wäßrige Lösung von 1,6 - 2,1 % Hexamethylendiamin und 0,8 - 1,0 % Caprolactam bezogen auf erzeugtes Polyamid. Der Kolonnenablauf wird dabei direkt in den VK-Rohrkopf zurückgeführt.

Nach dem Verdampferreaktor hat das Präpolymere eine ηrel von 1,25 gemessen 1 %ig in 98 %iger H₂SO₄ bei 20°C und weist nach Endgruppenanalyse einen Umsatz von 94 % auf. Der Gehalt an Bis-hexamethylentriamin beträgt 0,01 - 0,03 % bezogen auf Polyamid.

Nach dem Austritt der Polymerschmelze aus dem VK-Rohr hat das Copolyamid eine sehr helle Eigenfarbe, einen äußerst niedrigen Gehalt an Bis-hexamethylentriamin von 0,05 bis 0,06 %, bezogen auf Copolyamid, nahezu äquivalente Endgruppen von 43,9 mäq/kg Carboxyl- und 46,1 mäq/kg Aminoendgruppen, der Anteil an extrahierbaren Anteilen in siedendem Methanol beträgt 8,0 %.

Nach Austritt der Schmelze aus dem VK-Rohr und Abkühlung im Wasserbad unter den Schmelzpunkt wird das Copolyamid granuliert, mit VE-Wasser im Gegenstrom extrahiert (100 - 120°C, Verweilzeit ca. 36 h). Man erhält dabei ein Copolyamid mit einem Restextrakt von 0,21 %, ermittelt in siedendem Methanol.

Das extraktfeuchte Granulat wird im Schachttrockner (167°C, N₂-Gegenstrom) getrocknet, wobei die rel. Viskosität von 2,9 - 3,0 auf 3,4 steigt. Der Gehalt an extrahierbaren Anteilen liegt dann bei 0,25 %, die Restfeuchte bei < 0,08 % Wasser, der Schmelzpunkt (DSG) bei 204°C.

### Beispiel 2 (unter Mitverwendung von Extraktlactam)

Extraktlactam vermischt mit Frischlactam im Verhältnis 1:1 (3 kg) wird in Form einer 75 %igen wäßrigen Lösung über eine Dosierpumpe dem Verdampfer zugeführt. Vor dem Verdampfer wird diese Lösung mit 6 l einer 62 %igen wäßrigen Lösung aus AH-Salz, vermischt. Der Verdampfer ist vertikal angeordnet und besteht aus einem zylindrischen Rohr, das mit Füllkörpern (Raschigringen) gefüllt ist. Der Verdampfer hat eine freie Oberfläche von ca. 4 m², Beheizung mit flüssigem Wärmeträger. Die Temperatur vor dem Verdampfer beträgt 92°C, die Temp. nach dem Verdampfer 284°C. Die Verweilzeit im Verdampfer beträgt ca. 8 min. Das Präpolymere nach dem Verdampferreaktor hat folgende Zusammensetzung:

ηrel = 1,20, -COOH = 338 mäq/kg, NH₂=340 mäq/kg, H₂O-Gehalt 0,5 %,

Umsatz 81 %

Das Reaktionsgemisch wird zweiphasig in den VK-Rohrkopf eingespeist. Analog Beispiel 1 wird kontinuierlich soviel Frischlactam zugesetzt, daß ein Copolyamid mit 85 Gew.% Polyamid-6-Einheiten erhalten wird und anschließend im VK-Rohr polykondensiert.

Die Brüden aus dem VK-Rohrkopf bestehend aus Wasserdampf, Caprolactam, Hexamethylendiamin und in geringen Mengen cyclische Oligomeren, bevorzugt Dimeren, werden einer Kolonne zugeführt, rektifiziert und die wäßrige Lösung in den VK-Rohrkopf zurückgeführt.

Nach einer Verweilzeit von 11 h wird am unteren Ende des VK-Rohres ein Copolyamid mit einer ηᵣₑₗ = 3,0 und einem Umsatz von 92,5 % entnommen.

Nach Austritt der Schmelze aus dem VK-Rohr und Abkühlung im Wasserbad unter den Schmelzpunkt wird das Copolyamid granuliert, mit VE-Wasser im Gegenstrom extrahiert (100 - 120°C, Verweilzeit 36 h). Man erhält dabei ein Copolyamid mit einem Restextrakt von 0,21 %, ermittelt in siedendem Methanol.

Die erhaltene wäßrige Lösung von Extraktlactam wird nach Zugabe der gleichen Menge an Frischlactam bezogen auf den Feststoffgehalt der Lösung auf einen Gehalt von 75 Gew.% eingedampft und in den Verdampferreaktor zurückgeführt.

Das extraktfeuchte Granulat wird im Schachttrockner (167°C, N₂-Gegenstrom) getrocknet, wobei die rel. Viskosität von 2,9 - 3,0 auf 3,4 steigt. Der Gehalt an extrahierbaren Anteilen liegt dann bei 0,25 %, die Restfeuchte bei < 0,08 % Wasser, der Schmelzpunkt (DSC) bei 204°C.

## Patentansprüche

1. Verfahren zur kontinuierlichen Herstellung von Copolyamiden aus Caprolactam und Salzen aus Diaminen und Dicarbonsäuren bei dem man Caprolactam zusammen mit Polyamid bildenden Verbindungen aus Dicarbonsäuren und Diaminen von oben nach unten durch ein senkrecht stehendes Polymerisationsrohr bei Polyamid bildenden Temperaturen leitet, dadurch gekennzeichnet, daß man
(a) eine wäßrige Lösung von Salzen aus äquimolaren Mengen an Diaminen und Dicarbonsäuren unter erhöhtem Druck und gleichzeitiger Verdampfung von Wasser durch eine rohrförmige Vorkondensationszone unter Bildung einer Dampfphase und eines Präpolymeren bei einer Temperatur über dem Schmelzpunkt des Präpolymeren leitet
(b) die Dampfphase von der Präpolymerschmelze trennt
(c) die Dampfphase in einer Kolonne in Wasserdampf und eine wäßrige Diaminlösung trennt und die Diamine enthaltende wäßrige Lösung in die Polymerisation zurückführt
(d) die Präpolymerschmelze mit geschmolzenem Caprolactam bei Polyamid bildenden Temperaturen mischt und
(e) das Gemisch aus Präpolymerisat und Caprolactam von oben nach unten durch ein senkrecht stehendes Polymerisationsrohr bei Polyamid bildenden Temperaturen leitet und ein Copolyamid erhält.

2. Verfahren nach Anspruch 1, dadurch gekennzeichnet, daß man wäßrige Lösungen von äquimolaren Mengen an Diaminen der Formel I
H₂N-R₁-NH₂ I,
in der R₁ einen Alkylenrest mit 4 bis 16 Kohlenstoffatomen oder einen 1,3- oder 1,4-Phenylenrest bezeichnet und Dicarbonsäuren der Formel II
HOOC-R₂-COOH II,
in der R₂ einen Alkylenrest mit 4 bis 12 Kohlenstoffatomen oder einen 1,3- oder 1,4-Phenylenrest bezeichnet verwendet.

3. Verfahren nach einem der Ansprüche 1 oder 2, dadurch gekennzeichnet, daß man in Stufe a zusätzlich Caprolactam mitverwendet.

4. Verfahren nach einem der Ansprüche 1 bis 3, dadurch gekennzeichnet, daß man in Stufe a zusätzlich Caprolactam, das durch Extraktion des Copolyamids mit Wasser und anschließendes Eindampfen des wäßrigen Extrakts erhalten worden ist, mitverwendet.

5. Verfahren nach einem der Ansprüche 1 bis 4, dadurch gekennzeichnet, daß man in der Stufe a 5 bis 50 Gew.% der insgesamt zugeführten Caprolactammenge zuführt.

6. Verfahren nach einem der Ansprüche 1 bis 5, dadurch gekennzeichnet, daß man in der Stufe a eine Temperatur von 250 bis 350°C einhält.

7. Verfahren nach einem der Ansprüche 1 bis 6, dadurch gekennzeichnet, daß man in der Stufe a einen Überdruck von 0,5 bis 2,5 bar einhält.

8. Verfahren nach einem der Ansprüche 1 bis 7, dadurch gekennzeichnet, daß man in der Stufe a eine Verweilzeit von 40 bis 600 Sekunden einhält.

9. Verfahren nach einem der Ansprüche 1 bis 8, dadurch gekennzeichnet, daß man die Dampfphase von der Präpolymerschmelze im Kopf des senkrecht stehenden Polymerisationsrohres trennt.

10. Verfahren nach einem der Ansprüche 1 bis 9, dadurch gekennzeichnet, daß man die Dampfphase aus dem Kopf des Polymerisationsrohres in einer Kolonne in Wasserdampf und eine Diamine, Caprolactam und dessen Dimere enthaltende wäßrige Lösung trennt und die wäßrige Lösung in den Kopf des senkrecht stehenden Polymerisationsrohres oder in Stufe a zurückführt.

11. Verfahren nach einem der Ansprüche 1 bis 10, dadurch gekennzeichnet, daß man das Präpolymere und geschmolzenes Caprolactam im Kopf des Polymerisationsrohres mischt.

## Claims

1. A process for the continuous preparation of a copolyamide from caprolactam and salts of diamines and dicarboxylic acids, in which caprolactam is passed, together with polyamide-forming compounds obtained from dicarboxylic acids and diamines, downward through a vertical polymerization tube at polyamide-forming temperatures, wherein
(a) an aqueous solution of salts of equimolar amounts of diamines and dicarboxylic acids is passed, under superatmospheric presure and with simultaneous evaporation of water, through a tubular precondensation zone with formation of a vapor phase and a prepolymer at above the melting point of the prepolymer,
(b) the vapor phase is separated from the prepolymer melt,
(c) the vapor phase is separated in a column into steam and an aqueous diamine solution, and the aqueous solution containing diamines is recycled to the polymerization,
(d) the prepolymer melt is mixed with molten caprolactam at polyamide-forming temperatures, and
(e) the mixture of prepolymer and caprolactam is passed downward through a vertical polymerization tube at polyamide-forming temperatures and a copolyamide is obtained.

2. A process as claimed in claim 1, wherein an aqueous solution of equimolar amounts of diamines of the formula I
H₂N-R₁-ND₂ I
where R₁ is alkylene of 4 to 16 carbon atoms or 1,3- or 1,4-phenylene, and dicarboxylic acids of the formula II
HOOC-R₂-COOH II,
where R₂ is alkylene of 4 to 12 carbon atoms or 1,3- or 1,4-phenylene, is used.

3. A process as claimed in claim 1 or 2, wherein caprolactam is additionally present in stage a.

4. A process as claimed in any of claims 1 to 3, wherein caprolactam which has been obtained by extracting the copolyamide with water and then evaporating down the aqueous extract is additionally present in stage a.

5. A process as claimed in any of claims 1 to 4, wherein from 5 to 50% by weight of the total amount of caprolactam fed in is introduced in stage a.

6. A process as claimed in any of claims 1 to 5, wherein a temperature of from 250 to 350°C is maintained in stage a.

7. A process as claimed in any of claims 1 to 6, wherein a superatmospheric pressure of from 0.5 to 2.5 bar is maintained in stage a.

8. A process as claimed in any of claims 1 to 7, wherein a residence time of from 40 to 600 seconds is maintained in stage a.

9. A process as claimed in any of claims 1 to 8, wherein the vapor phase is separated from the prepolymer melt in the top of the vertical polymerization tube.

10. A process as claimed in any of claims 1 to 9, wherein the vapor phase from the top of the polymerization tube is separated in a column into steam and an aqueous solution containing diamines, caprolactam and its dimers, and the aqueous solution is recycled to the top of the vertical polymerization tube or to stage a.

11. A process as claimed in any of claims 1 to 10, wherein the prepolymer and molten caprolactam are mixed in the top of the polymerization tube.

## Revendications

1. Procédé de préparation en continu de copolyamides à partir de caprolactame et de sels de diamines et d'acides dicarboxyliques, dans lequel on introduit du caprolactame avec des composés d'acides dicarboxyliques et de diamines formant du polyamide de haut en bas dans un tube de polymérisation disposé verticalement, à des températures de formation de polyamide, caractérisé en ce que
(a) l'on introduit une solution aqueuse de sels constitués de quantités équimolaires de diamines et d'acides dicarboxyliques sous pression élevée et évaporation simultanée d'eau, dans une zone tubulaire de précondensation en formant une phase vapeur et un prépolymère, à une température supérieure au point de fusion du prépolymère,
(b) on sépare la phase vapeur de la masse fondue de prépolymère,
(c) on sépare la phase vapeur dans une colonne, en vapeur d'eau et en une solution aqueuse de diamine, et l'on recycle dans la polymérisation la solution aqueuse contenant les diamines,
(d) on mélange la masse fondue de prépolymère avec du caprolactame fondu à des températures de formation de polyamide et
(e) on introduit le mélange de prépolymère et de caprolactame de haut en bas dans un tube de polymérisation disposé verticalement à des températures de formation de polyamide, et l'on obtient un copolyamide.

2. Procédé selon la revendication 1, caractérisé en ce que l'on utilise des solutions aqueuses de quantités équimolaires de diamines de formule I
H₂N-R₁-NH₂ I,
dans laquelle R₁ représente un reste alkylène ayant 4 à 16 atomes de carbone ou un reste 1,3- ou 1,4-phénylène, et d'acides dicarboxyliques de formule II
HOOC-R₂-COOH II,
dans laquelle R₂ représente un reste alkylène ayant 4 à 12 atomes de carbone ou un reste 1,3- ou 1,4-phénylène.

3. Procédé selon la revendication 1 ou 2, caractérisé en ce que l'on utilise de plus dans l'étape a du caprolactame.

4. Procédé selon l'une quelconque des revendications 1 à 3, caractérisé en ce que l'on utilise de plus dans l'étape a du caprolactame, qui a été obtenu par extraction du copolyamide avec de l'eau et concentration subséquente par évaporation de l'extrait aqueux.

5. Procédé selon l'une quelconque des revendications 1 à 4, caractérisé en ce que l'on introduit dans l'étape a 5 à 50% en poids de la quantité totale introduite de caprolactame.

6. Procédé selon l'une quelconque des revendications 1 à 5, caractérisé en ce que l'on maintient dans l'étape a une température de 250 à 350°C.

7. Procédé selon l'une quelconque des revendications 1 à 6, caractérisé en ce que l'on maintient dans l'étape a une surpression de 0,5 à 2,5 bar.

8. Procédé selon l'une quelconque des revendications 1 à 7, caractérisé en ce que l'on maintient dans l'étape a une durée de séjour de 40 à 600 secondes.

9. Procédé selon l'une quelconque des revendications 1 à 8, caractérisé en ce que l'on sépare la phase vapeur de la masse fondue de prépolymère en tête du tube de polymérisation disposé verticalement.

10. Procédé selon l'une quelconque des revendications 1 à 9, caractérisé en ce que l'on sépare la phase vapeur provenant de la tête du tube de polymérisation dans une colonne, en vapeur d'eau et en une solution aqueuse contenant des diamines, du caprolactame et ses dimères, et en ce que l'on recycle la solution aqueuse en tête du tube de polymérisation disposé verticalement ou dans l'étape a.

11. Procédé selon l'une quelconque des revendications 1 à 10, caractérisé en ce que l'on mélange le prépolymère et le caprolactame fondu en tête du tube de polymérisation.
